# EUROPÄISCHE PATENTSCHRIFT

(11) **EP 0 430 309 B1**
(45) Veröffentlichungstag und Bekanntmachung des Hinweises auf die Patenterteilung: **16.02.1994**
(21) Anmeldenummer: 90123387.4
(22) Anmeldetag: 23.10.1986
(51) Int. Cl.: F16K 27/02, E03C 1/02, F16K 11/22, F24D 19/10

(54) **Strangregulierventil**
Combination valve for feed conduit
Vanne combinée pour tuyau d'alimentation

(30) Priorität: 07.11.1985 DE 3539463; 30.01.1986 DE 3602744
(43) Veröffentlichungstag der Anmeldung: 05.06.1991
(62) Teilanmeldung aus: 86114751.0
(73) Patentinhaber: F.W. Oventrop KG, 59939 Olsberg (DE)
(72) Erfinder: Rump, Georg F., Dipl.-Wirtsch.-Ing., W-5787 Olsberg (DE); Seiffert, Günter, Dipl.-Ing., W-5787 Olsberg (DE)
(74) Vertreter: Patentanwälte Dipl.-Ing. Conrad Köchling Dipl.-Ing. Conrad-Joachim Köchling

(56) Entgegenhaltungen:
- CH-A- 568 505
- DE-A- 1 804 340
- DE-A- 2 843 637
- FR-A- 1 204 409
- GB-A- 227 086

## Beschreibung

Die Erfindung betrifft ein Strangregulierventil der im Oberbegriff des Anspruches 1 angegebenen Art.

Ein derartiges Strangregulierventil, welches in größere Warmwasserheizungsanlagen eingebaut wird, und mit welchen in den einzelnen Leitungssträngen die Wassermenge und der Differenzdruck eingestellt werden kann, ist aus der EP-A-0 153 427 bekannt.

Hierbei mündet der Anschlußstutzen zur Aufnahme einer Druckmeßeinrichtung, die zur Messung des Mediumdrucks in Strömungsrichtung hinter dem Ventilsitz bestimmt ist, hinter dem Ventilsitz und nahe dessen in den Gehäusedurchgangskanal ein. Ferner zielt die Mündung des vorgenannten Anschlußstutzens in etwa zum Ventilsitz hin, woraus sich bei geöffnetem Ventilsitz offenbar Beeinflussungen der Strömungscharakteristik ergeben.
Hierbei hat sich nämlich herausgestellt, daß die mittels der eingefügten Meßeinrichtung ermittelten Werte für den Druckverlust des Ventiles mit den tatsächlich eintretendem Druckverlust des Ventils innerhalb der Rohrleitung nicht übereinstimmen.
Ein weiterer Nachteil des aus der EP-A- 0153 427 bekannten Strangregulierventiles besteht darin, daß eine ordnungsgemäße Anordnung des Strangregulierventiles nur im Vorlauf eines Strömungskreises möglich ist, da nur dann bei der richtigen Anströmung des Strangregulierventiles der Anschlußstutzen für die Füll- und Entleereinrichtung in Strömungsrichtung hinter dem Ventilkegel angeordnet ist. Die lagerichtige Anordnung im Rücklauf dieses Strömungskreises ist nicht möglich, weil dann der Stutzen zur Aufnahme der Entleer- bzw. Befülleinrichtung in Strömungsrichtung vor dem Ventilkörper angeordnet ist, wenn das Ventil in falscher Strömungsrichtung eingebaut ist.
In diesem Falle resultieren daraus aber auch erhebliche, unerwünschte Beeinflussungen der Strömungscharakteristik.

Aufgabe der Erfindung ist es nun, ein Strangregulierventil der im Oberbegriff des Anspruches 1 angegebenen Art, insbesondere unter Beibehaltung der bereits erreichten Vorteile, die unter anderem darin bestehen, daß alle Stutzen, die für die Bedienung des Strangregulierventiles notwendig sind, von ein und derselben Seite her bequem zugänglich und ablesbar sind, derart zu verbessern, daß es sowohl im Vorlauf- als auch im Rücklaufstrang eines Strömungskreises lagerichtig eingebaut werden kann, und dennoch die ordnungsgemäße Entleerung und Befüllung des Strömungskreises ermöglicht ist.
Die Lösung dieser Aufgabe ist dadurch gekennzeichnet, daß beide Anschlußstutzen etwa gleiche Durchflußquerschnitte aufweisen, die so bemessen sind, daß beide alternativ als Füll- und Entleerstutzen verwendbar sind, wobei im Vorlaufstrang eines Strömungskreises das Füll- und Entleerventil mit dem in Strömungsrichtung hinter dem Ventilsitz befindlichen Anschlußstutzen und im Rücklaufstrang das Füll- und Entleerventil mit dem in Strömungsrichtung vor dem Ventilsitz befindlichen Anschlußstutzen verbindbar ist.

Durch die erfindungsgemäße Ausbildung wird erreicht, daß an beide Anschlußstutzen alternativ die Befüll- und Entleervorrichtung angeschlossen werden kann, so daß die Anordnung des Strangregulierventiles im Strömungskreis unabhängig von der Entnahme- bzw. Befüllmöglichkeit ist. Durch diese Ausbildung ist sichergestellt, daß das Strangregulierventil sowohl im Vorlauf als auch im Rücklauf eines Strömungskreises lagerichtig und strömungsgünstig angeordnet werden kann, wobei dennoch das Befüllen und Entleeren ordnungsgemäß durchgeführt werden kann.

Ausführungsbeispiele der Erfindung sind in den Zeichnungen dargestellt und im folgenden näher beschrieben.

Es zeigt:
- Fig. 1: ein Strangregulierventil im Längsschnitt;
- Fig. 2: desgleichen gemäß der Linie II-II der Figur 1 gesehen;
- Fig. 3: eine Variante ebenfalls im Längsschnitt;
- Fig. 4: desgleichen entsprechend der Linie IV-IV der Figur 3 gesehen;
- Fig. 5: ein Anwendungsbeispiel schematisch dargestellt.

Den Ausführungsbeispielen ist ein Ventilgehäuse 1 mit einem Zulaufstutzen 2, einem Ablaufstutzen 3 und drei weiteren Stutzen 4, 5 und 6 gemeinsam. Alle Stutzen 2 bis 6 sind am Ventilgehäuse 1 angeformt. Ferner sind die Stutzen 4 bis 6 in einer gemeinsamen Ebene und von derselben Längsseite des Ventilgehäuses 1 quer abstrebend angeordnet.

In den Stutzen 4, dessen Längsachse die Längsachse des Ablaufstutzens 3 in einem Winkel von etwa 45° kreuzt, ist ein Ventiloberteil 7 dichtschließend eingeschraubt. In letzterem ist eine Spindel 8 angeordnet, die an einem Ende eine Handhabe 9 und am anderen Ende einen Verschlußkörper 10 trägt. Letzterer wirkt zum Öffnen und Schließen des Ventiles mit einem gehäusefesten Ventilsitz 11 zusammen.

Der Stutzen 5 ist zur Aufnahme einer nicht dargestellten Druckmeßeinrichtung bestimmt.
In den Stutzen 5 kann auch noch ein Füll- und Entleerventil eingefügt werden.
Der Stutzen 6, welcher in Strömungsrichtung des Mediums vor dem Ventilsitz 11 in den Durchgangskanal 12 des Ventilgehäuses 1 einmündet, ist zur Aufnahme einer weiteren Meßeinrichtung bestimmt. Auch in diesen Stutzen kann ein Füll- und Entleerventil eingesetzt werden. Beide Stutzen 5,6 haben etwa gleichen Durchflußquerschnitt. Der Stutzen 5 mündet in einen in Strömungsrichtung des Mediums hinter dem Ventilsitz 11 angeordneten Kanal 13 ein, der um das Ventiloberteil 7 herumgeführt ist und an der dem Stutzen 5 abgewandten Seite und zum Auslaufstutzen 3 hinzielend ausmündet.

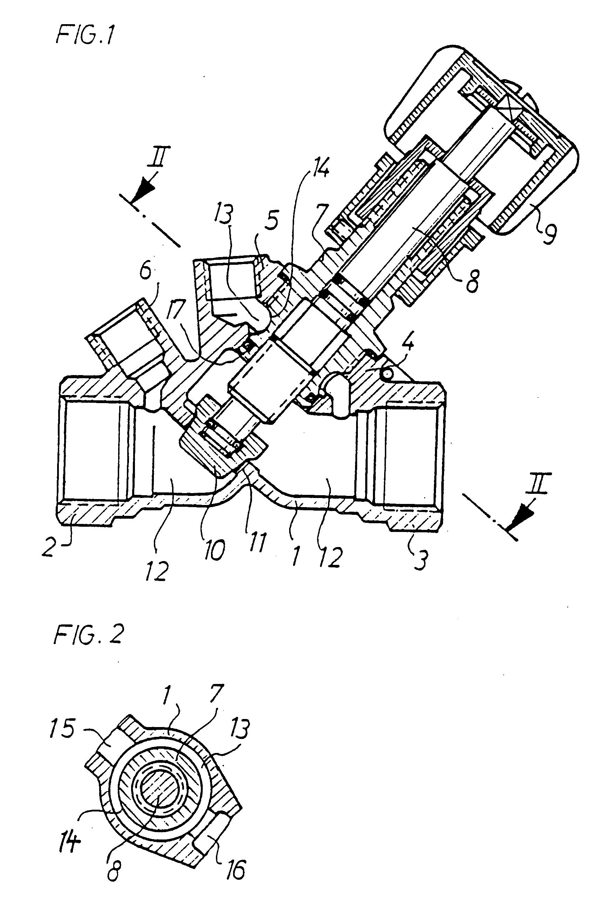

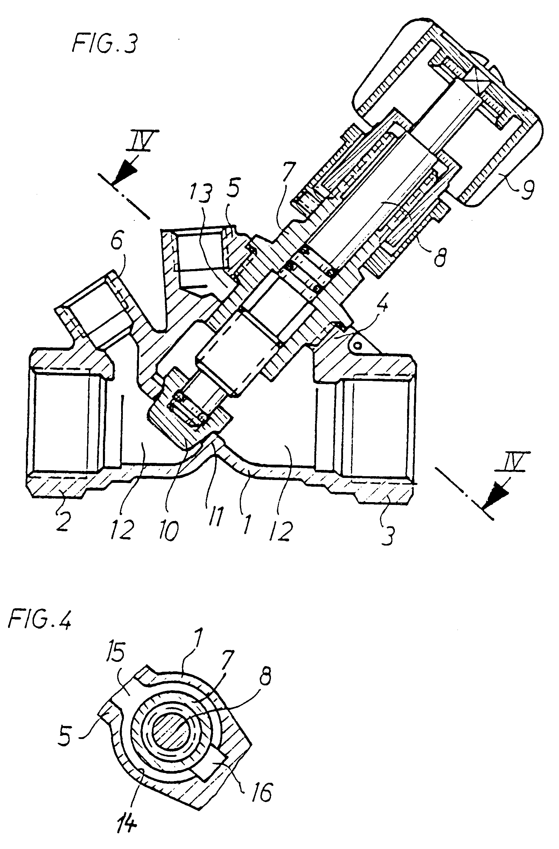

In den Figuren 1 und 2 ist der Kanal 13 durch eine im Ventiloberteil 7 angeformte, umlaufende Rinne 14 und durch die glatte Bohrung des Stutzens 4 gebildet, während bei dem in den Figuren 3 und 4 gezeigten Strangregulierventil die Rinne 14 im Ventilgehäuse 1 angeformt ist und letztere durch den in den Stutzen 4 dichtschließend eingreifenden Teil des Ventiloberteiles 7 zu einem Kanal 13 ergänzt ist.

Außerdem sind im Ventilgehäuse 1 Öffnungen 15 und 16 vorgesehen.

Die Öffnung 15 verbindet den Stutzen 5 mit dem Kanal 13, während die vom Kanal 13 ausgehende Öffnung 16 in den hinter dem Ventilsitz 11 befindlichen Teil des Durchgangskanales 12 mündet und zum Anschlußstutzen 3 hinzielt sowie nahe dessen angeordnet ist.

In den Figuren 1 und 2 ist der dem Verschlußkörper 10 zugewandte Endteil des Ventiloberteiles mittels eines O-Ringes 17 abgedichtet, während in den Figuren 3 und 4 der vorgenannte Endteil mit Haftsitz und mindestens annähernd dichtschließend eingefügt ist.

Die Stutzen 2 und 3 sind zueinander koaxial verlaufend angeordnet.
Die Längsachse der Öffnung 16 schneidet die Längsachse des Auslaufstutzens 3 in einem Winkel von etwa 45°.

Gemäß Fig. 1 sind die in den Gehäusekanal 12 einmündenden Abschnitte der Anschlußstutzen 5,6 zur Längserstreckung des Gehäusekanales bevorzugter Weise rechtwinklig gerichtet angeordnet, um zur Verfälschung der Meßwerte führende Querströmungen zu vermeiden.

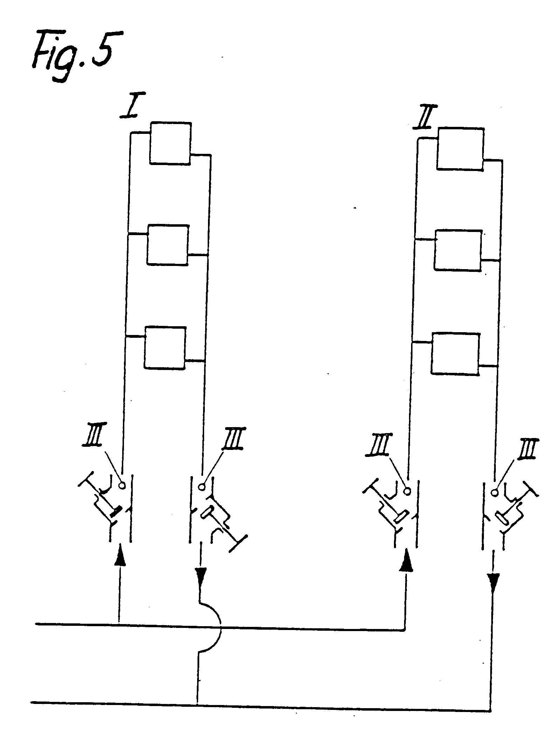

In Fig. 5 ist das Strangregulierventil gemäß der Erfindung in der jeweiligen Einbausituation im linksliegenden Strang 1 dargestellt, während der Stand der Technik gemäß EP-A-0153 427 im rechtsbefindlichen Strang 2 verdeutlicht ist. Durch die erfindungsgemäße Ausbildung der Anschlußstutzen 5 und 6, die etwa gleiche Durchflußquerschnitte aufweisen, ist es möglich, wie in Strang 1 dargestellt, beide Ventile in richtiger Strömungsrichtung einzubauen, egal ob der Einbau im Vorlauf oder im Rücklauf erfolgt. Die Strömungscharakteristik und Geräuschbildung der Ventile ist also wunschgemäß erreicht bzw. unterbunden. Je nach Einbaulage wird alternativ der Anschlußstutzen 5 oder der Anschlußstutzen 6 zum Einsatz des Befüll- und Entleerventiles genutzt.

Bei der Ausführungsform gemäß Strang 2, die dem Stand der Technik entspricht, ist das Strangregulierventil nur im Vorlauf lagerichtig einzubauen, während es im Rücklauf entgegen der eigentlich gewünschten Strömungsrichtung eingebaut werden muß, sofern die Entleerung und Befüllung möglich bleiben soll. Dies ist aus dem Grunde beim Stand der Technik notwendig, weil die Entleerungseinrichtung nur mit dem einen der beiden Stutzen verbindbar ist, der nämlich in Normalströmungsrichtung hinter dem Ventilkörper sitzt.

Diese Anordnung ist nachteilig, welcher Nachteil durch die Erfindung beseitigt worden ist.
Im Unterschied zu der in der Zeichnung dargestellten Ausführungsform ist es auch möglich, das Ventil mit Ventiloberteil 7, Spindel 8, Handhabe 9, Verschlußkörper 10 und Ventilsitz 11 nicht als Schrägsitzventil, sondern als Gradsitzventil auszubilden.

Auch dabei ist die erfindungsgemäße vorteilhafte Wirkung durch die konstruktiven Maßnahmen gemäß Vorschlag der Erfindung zu erreichen.
Desweiteren ist es je nach Montage, Ort und Zugänglichkeit vorteilhaft, wenn eine der in den Ansprüchen 2 bis 5 bezeichneten Weiterbildungen verwirklicht wird.
So kann beispielsweise bei dem Ausführungsbeispiel gemäß Figur 1 der Stutzen 5 aus der von den Stutzen 2, 3, 4 und 6 gebildeten Ebene um eine bestimmte Winkelstellung versetzt angeordnet sein, ebenso wie dies für den Stutzen 6 möglich wäre. Hierdurch würde die vorteilhafte Einbauweise des Strangregulierventiles nicht beeinträchtigt. Desweiteren ist es möglich, daß beide Anschlußstutzen 5 und 6 zwischen dem Zulaufstutzen 2 und dem Anschlußstutzen 4 angeordnet sind, wie dies in den Zeichnungsfiguren 1 und 3 verdeutlicht ist. Dabei ist der Stutzen 5 lediglich mit einer Ringleitung oder in anderer Weise mit dem zwischen dem Ventilsitz 11 und dem Ablaufstutzen 3 befindlichen Raum zu verbinden. Selbstverständlich wäre es auch möglich, die Anschlußstutzen 5 und 6 zwischen dem Anschlußstutzen 4 und dem Ablauf stutzen 3 anzuordnen, wobei dann der Stutzen 6 durch eine entsprechende Leitungsverbindung mit dem Raum zwischen Zulaufstutzen 2 und Ventilsitz 11 zu verbinden wäre.

Auch die Anordnung in der Weise, daß der Anschlußstutzen 6 zwischen Zulauf stutzen 2 und Anschlußstutzen 4, der Anschlußstutzen 5 aber zwischen Anschlußstutzen 4 und Ablaufstutzen 3 angeordnet wäre, ist möglich und je nach Einbauverhältnissen vorteilhaft.
Die Erfindung ist nicht auf die Ausführungsbeispiele beschränkt, sondern im Rahmen der Offenbarung vielfach variabel.

## Patentansprüche

1. Strangregulierventil, dessen Gehäuse (1) einen Gehäusedurchgangskanal (12) sowie einen Zu-(2) und einen Ablaufstutzen (3) und dazu quer gerichtete sowie in einer gemeinsamen Ebene von derselben Gehäuselängsseite abstrebend angeordnete Anschlußstutzen (4,5,6) für ein das Verschlußorgan tragendes Ventiloberteil, für Meßeinrichtungen sowie für ein Füll- und Entleerventil aufweist, wobei ein Anschlußstutzen (5) zur Aufnahme einer Medium-Druckmeßeinrichtung in Strömungsrichtung des Mediums hinter dem Ventilsitz angeordnet ist, **dadurch gekennzeichnet,** daß beide Anschlußstutzen (5,6) etwa gleiche Durchflußquerschnitte aufweisen, die so bemessen sind, daß beide alternativ als Füll- und Entleerstutzen verwendbar sind, wobei im Vorlaufstrang eines Strömungskreises das Füll- und Entleerventil mit dem in Strömungsrichtung hinter dem Ventilsitz befindlichen Anschlußstutzen (5) und im Rücklaufstrang das Füll- und Entleerventil mit dem in Strömungsrichtung vor dem Ventilsitz befindlichen Anschlußstutzen (6) verbindbar ist.

2. Strangregulierventil nach Anspruch 1, **dadurch gekennzeichnet,** daß mindestens einer der Anschlußstutzen (5 bzw. 6) außerhalb der vom Zu- (2), Ablauf-(3) und Anschlußstutzen (4) für Ventiloberteil (7) aufgespannten Ebene vom Gehäuse (1) abstrebend angeformt ist.

3. Strangregulierventil nach Anspruch 1 oder 2, **dadurch** **gekennzeichnet**, daß beide Anschlußstutzen (5,6) zwischen Zulaufstutzen (2) und Anschlußstutzen (4) angeordnet sind.

4. Strangregulierventil nach Anspruch 1 oder 2, **dadurch** **gekennzeichnet**, daß beide Anschlußstutzen (5,6) zwischen Anschlußstutzen (4) und Ablaufstutzen (3) angeformt sind.

5. Strangregulierventil nach Anspruch 1 oder 2, **dadurch** **gekennzeichnet**, daß der Anschlußstutzen (6) zwischen Zulaufstutzen (2) und Anschlußstutzen (4), der Anschlußstutzen (5) aber zwischen Anschlußstutzen (4) und Ablaufstutzen (3) angeordnet ist.

## Claims

1. A pipeline regulating valve, the housing (1) of which comprises a housing through-conduit (12) and also an inlet socket (2) and an outlet socket (3) and connecting sockets (4, 5, 6), directed transversally thereto and also disposed in a common plane and extending from the same longitudinal side of the housing, for an upper valve part bearing the sealing member, for measuring appliances and also for a filling and drain valve, whereby a connecting socket (5) for housing a medium pressure measurement appliance is disposed behind the valve seat in the direction of flow of the medium,
**characterised in that** both connecting sockets (5, 6) comprise roughly identical passage areas, which are dimensioned so that both can be used alternatively as filling and emptying connecting pieces, whereby in the forward flow run of a flow circuit the filling and drain valve can be connected to the connecting socket (5) located behind the valve seat in the direction of flow and in the return flow run the filling and drain valve can be connected to the connecting socket (6) located in front of the valve seat in the direction of flow.

2. A pipeline regulating valve according to Claim 1,
**characterised in that** at least one of the connecting sockets (5 or 6 respectively) is mounted outside the plane formed by inlet socket (2), outlet socket (3) and connecting socket (4) for upper valve part and extends away from the housing (1).

3. A pipeline regulating valve according to Claim 1 or 2,
**characterised in that** both connecting sockets (5, 6) are disposed between inlet socket (2) and connecting socket (4).

4. A pipeline regulating valve according to Claim 1 or 2,
**characterised in that** both connecting sockets (5, 6) are mounted between connecting socket (4) and outlet socket (3).

5. A pipeline regulating valve according to Claim 1 or 2,
**characterised in that** connecting socket (6) is disposed between inlet socket (2) and socket (4), but connecting socket (5) is disposed between socket (4) and outlet socket (3).

## Revendications

1. Vanne de régulation pour branche de circuit de fluide, dont le corps (1) présente un conduit de passage (12) ainsi qu'une tubulure d'entrée (2) et une tubulure de sortie (3), et que des tubulures de raccordement (4, 5, 6) à orientation transversale, qui partent en saillie du même côté longitudinal du corps dans un plan commun et sont destinées à recevoir, respectivement, une partie supérieure de vanne portant l'obturateur, des dispositifs de mesure et une soupape de remplissage et de vidage, la tubulure de raccordement (5) destinée à recevoir un dispositif de mesure de la pression du fluide étant disposée après le siège de la vanne dans la direction d'écoulement du fluide, **caractérisée** en ce que les deux tubulures de raccordement (5, 6) présentent des sections de passage approximativement identiques, qui sont dimensionnées de façon à pouvoir utiliser alternativement les deux tubulures comme tubulure de remplissage et de vidage, la soupape de remplissage et de vidage pouvant être reliée, dans la branche montante d'un circuit de fluide, à la tubulure de raccordement (5) qui se trouve après le siège de vanne dans la direction d'écoulement, tandis que, dans la branche de retour, la soupape de remplissage et de vidage peut être reliée à la tubulure de raccordement (6) qui se trouve avant le siège de vanne dans la direction d'écoulement.

2. Vanne de régulation pour branche de circuit de fluide selon la revendication 1, **caractérisée** en ce qu'au moins une des tubulures de raccordement (5 ou 6) est disposée en partant en saillie du corps (1) à l'extérieur du plan engendré par la tubulure d'entrée (2), la tubulure de sortie (3) et la tubulure de raccordement (4) pour la partie supérieure de vanne (7).

3. Vanne de régulation pour branche de circuit de fluide selon la revendication 1 ou 2, **caractérisée** en ce que les deux tubulures de raccordement (5, 6) sont disposées entre la tubulure d'entrée (2) et la tubulure de raccordement (4).

4. Vanne de régulation pour branche de circuit de fluide selon la revendication 1 ou 2, **caractérisée** en ce que les deux tubulures de raccordement (5, 6) sont disposées entre la tubulure de raccordement (4) et la tubulure de sortie (3).

5. Vanne de régulation pour branche de circuit de fluide selon la revendication 1 ou 2, **caractérisée** en ce que la tubulure de raccordement (6) est disposée entre la tubulure d'entrée (2) et la tubulure de raccordement (4), tandis que la tubulure de raccordement (5) est disposée entre la tubulure de raccordement (4) et la tubulure de sortie (3).
